# EUROPEAN PATENT SPECIFICATION

(11) **EP 3 355 324 B1**
(45) Date of publication and mention of the grant of the patent: **16.10.2019**
(21) Application number: 18151030.6
(22) Date of filing: 10.01.2018
(51) Int. Cl.: H01F 27/34, H01F 38/00, H02M 5/458, H02M 1/00, H01F 27/40

(54) **POWER ELECTRONIC TRANSFORMER**
LEISTUNGSELEKTRONISCHER TRANSFORMATOR
TRANSFORMATEUR ÉLECTRONIQUE DE PUISSANCE

(30) Priority: 25.01.2017 CN 201720105819 U
(43) Date of publication of application: 01.08.2018
(73) Proprietor: Siemens Aktiengesellschaft, 80333 München (DE)
(72) Inventor: YAO, Ji Long, Beijing, Beijing 100102 (CN); ZHAO, Yan Feng, Beijing, Beijing 100012 (CN); SHI, Lei, Beijing, Beijing 101300 (CN); LIU, Ze Wei, Beijing, Beijing 100070 (CN)
(74) Representative: Isarpatent

(56) References cited:
- US-A1- 2010 164 673
- US-A1- 2015 326 132
- SHE XU ET AL: "Design and Demonstration of a 3.6-kV-120-V/10-kVA Solid-State Transformer for Smart Grid Applica", IEEE TRANSACTIONS ON POWER ELECTRONICS, INSTITUTE OF ELECTRICAL AND ELECTRONICS ENGINEERS, USA, vol. 29, no. 8, 1 August 2014 (2014-08-01) , pages 3982-3996, XP011544102, ISSN: 0885-8993, DOI: 10.1109/TPEL.2013.2293471 [retrieved on 2014-03-26]

## Description

### Technical field

The present invention relates to a power electronic transformer, in particular to an arrangement of voltage transformation units on various low-voltage circuit branches thereof.

### Background art

A transformer is an important device in electrical transmission and distribution. A conventional power transformer is generally very large, and has no self-redundancy. When any fault is detected, it is necessary to first de-energize and turn off the transformer, and then perform maintenance. With the steady expansion of cities, and the increase in the number of non-linear loads and harmonic loads, load demands are also growing by the day and becoming more diversified. Hence, power transformers must have a quick response, high control ability and the ability to respond to power.

A power electronic transformer (PET), also called a solid-state transformer, is an intelligent solution whereby power is transmitted with electromagnetic isolation.

The structure of a power electronic transformer determines that multiple voltage transformation units will generally be provided in one device; interference will occur between these adjacently disposed voltage transformation units due to magnetic leakage, and the characteristics of the transformer will therefore be affected.

In the prior art, the distances between the various voltage transformation units can be increased to reduced such interference, but this will increase the overall size of the power electronic transformer. It is also possible to have a solution whereby a metal housing is added to serve as an electromagnetic shield. However, such a solution is generally suitable for a transformer disposed on its own. In the case of a power electronic transformer, since it is provided with multiple voltage transformation units, the provision of a metal housing for each voltage transformation unit would not only take up a lot of space, but would also significantly increase costs.

Prior art document US2015/0326132 discloses a power electronic transformer according to the preamble of claim 1.

### Content of the invention

To solve one or more of the problems mentioned above, the aim of the present invention is to provide a power electronic transformer, comprising at least N low-voltage circuit branches, wherein each low-voltage circuit branch is respectively provided with a voltage transformation unit, all the voltage transformation units are disposed adjacently, and N is a natural number greater than 3, characterized in that an (M-1)th voltage transformation unit and an (M+1)th voltage transformation unit on two sides of any one Mth voltage transformation unit amongst the voltage transformation units have opposite magnetic flux directions, wherein M is an integer greater than 1 and less than N.

The size and direction of current in each voltage transformation unit in the power electronic transformer can be controlled, and the magnetic fluxes generated by voltage transformation units on two sides of one voltage transformation unit can thereby be made to be in opposite directions, such that leakage magnetic flux of these two voltage transformation units can be at least partially offset at the intermediate voltage transformation unit, thereby reducing interference from leakage magnetic flux.

According to a preferred embodiment, magnetic fluxes, generated at the Mth voltage transformation unit, of the (M-1)th voltage transformation unit and the (M+1)th voltage transformation unit offset each other. Interference from leakage magnetic flux can be minimized through such adjustment.

More advantageously, all the voltage transformation units are the same in design, hence adjustment can be carried out directly such that current directions in the (M-1)th voltage transformation unit and the (M+1)th voltage transformation unit are opposite. In this case, interference from leakage magnetic flux can be minimized by simple adjustment alone.

More advantageously, all the voltage transformation units are arranged equidistantly from each other; the purpose of this arrangement is also to further simplify control of current in the various voltage transformation units.

According to a preferred embodiment, the N voltage transformation units are annularly arranged, such that an Nth voltage transformation unit is adjacent to a first voltage transformation unit, wherein N is an integer multiple of 4. Such an arrangement enables interference from leakage magnetic flux at each of the N voltage transformation units to be minimized, because the annular arrangement enables the voltage transformation units that were at head and tail positions in the original linear arrangement to also be sandwiched between two other voltage transformation units, and interference from leakage magnetic flux is reduced by the mutual offsetting of magnetic fluxes.

According to a preferred embodiment, all the voltage transformation units are arranged with equal included angles therebetween.

According to a preferred embodiment, all the voltage transformation units are arranged on an annular insulating support.

### Description of the accompanying drawings

The accompanying drawings below are merely intended to illustrate and explain the present invention schematically, without limiting the scope thereof, wherein:
Fig. 1 shows, in the form of a schematic diagram, a basic structure of a power electronic transformer.
Fig. 2 shows, in the form of a schematic diagram, a basic structure of a low-voltage circuit branch of a power electronic transformer.
Fig. 3 shows, in the form of a schematic diagram, two voltage transformation units of a power electronic transformer.
Fig. 4 shows, in the form of a schematic diagram, an arrangement of three voltage transformation units of a power electronic transformer according to an embodiment of the present invention.
Fig. 5 shows, in the form of a schematic diagram, an arrangement of eight voltage transformation units of a power electronic transformer according to an embodiment of the present invention.

Key to labels used in the drawings:
- 100: power electronic transformer
- 110: high-voltage stage
- 130: isolation stage
- 150: low-voltage stage
- 101, 102: low-voltage circuit branches
- T1-Tn: voltage transformation units
- 1014; 1024: primary windings
- 1016; 1026: secondary windings
- 1013; 1023: cores

### Particular embodiments

To enable clearer understanding of the technical features, objectives and effects of the present invention, particular embodiments of the present invention are now explained with reference to the accompanying drawings.

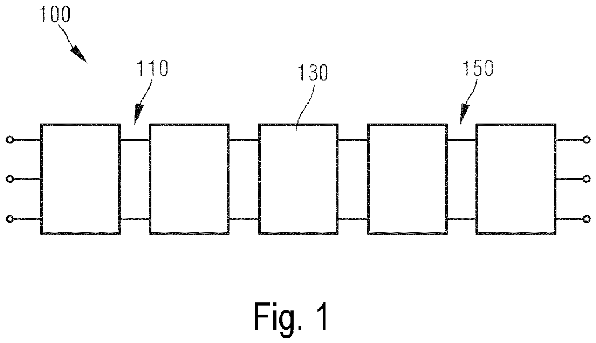

Fig. 1 shows a basic structure of a power electronic transformer 100, which is an embodiment in which an input voltage signal undergoes AC-DC-AC conversion at a primary side (i.e. a high-voltage stage 110) of a high-frequency transformer. Although not shown, a form in which AC-AC conversion is performed is of course also possible. A high-frequency signal obtained is coupled to a secondary side (i.e. a low-voltage stage 150) via a high-frequency transformer or isolation stage 130, then AC-DC-AC conversion or AC-AC conversion is performed to obtain electrical energy at power frequency.

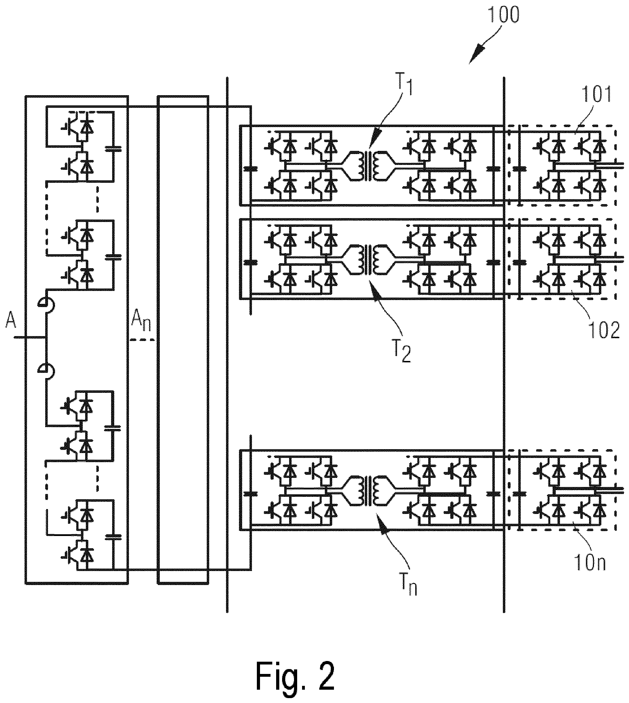

Unlike a conventional transformer, in which voltage conversion is achieved by means of a large quantity of windings between primary and secondary sides, the conversion of voltage by a power electronic transformer is generally achieved through the use of multiple low-voltage circuit branches. Fig. 2 schematically shows one embodiment, in which low-voltage circuit branches 101 and 102 are based on split DC-link capacitors. Although not shown, in other embodiments, voltage conversion may also be achieved at a DC side by means of a cascaded multilevel converter. Regardless of the particular form, a power electronic transformer will generally have multiple low-voltage circuit branches for output, in order to achieve voltage output of the same grade as a conventional transformer. Electromagnetic isolation is achieved by separately providing multiple mid-frequency or high-frequency voltage transformation units in these low-voltage circuit branches. However, there is a challenge associated with the provision of multiple voltage transformation units in one device: due to magnetic leakage, interference will occur between the voltage transformation units.

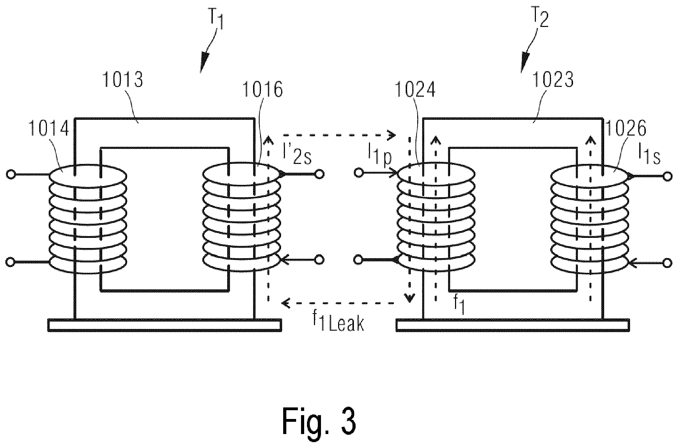

Fig. 3 shows, in the form of a schematic diagram, typical iron core voltage transformation units T1 and T2 used in an isolation stage in low-voltage circuit branches in the power electronic transformer shown in fig. 2. Since multiple low-voltage circuit branches must be arranged in one device, a situation will occur whereby two voltage transformation units T1 and T2 are arranged side by side, as shown in fig. 3. In an ideal situation, an induced magnetic field should be contained within the core, so as to maximize the conversion ratio. However, in reality, there is always leakage of magnetic flux into the space outside the core. In the case of a voltage transformation unit arranged on its own, magnetic leakage will only result in reduced efficiency, without having a significant impact on the performance of the device. However, when two voltage transformation units are arranged close to each other, interference therebetween cannot be ignored.

In the case of the two voltage transformation units T1 and T2 arranged adjacent to each other as shown in fig. 3, a primary current I_{1P} on a primary-side winding 1024 of voltage transformation unit T2 generates a leakage magnetic flux f₁ₗₑₐₖ. This leakage magnetic flux f₁ₗₑₐₖ passes through a secondary-side winding 1016 of voltage transformation unit T1 (or in another arrangement passes through a primary winding 1014), thereby generating an undesirable induced current I'₂ₛ in the secondary winding 1016; this induced current affects the normal operation of the power electronic transformer. In particular, in the case where the various voltage transformation units are in a high-frequency operating condition, such interference between two adjacent voltage transformation units might cause a more serious problem.

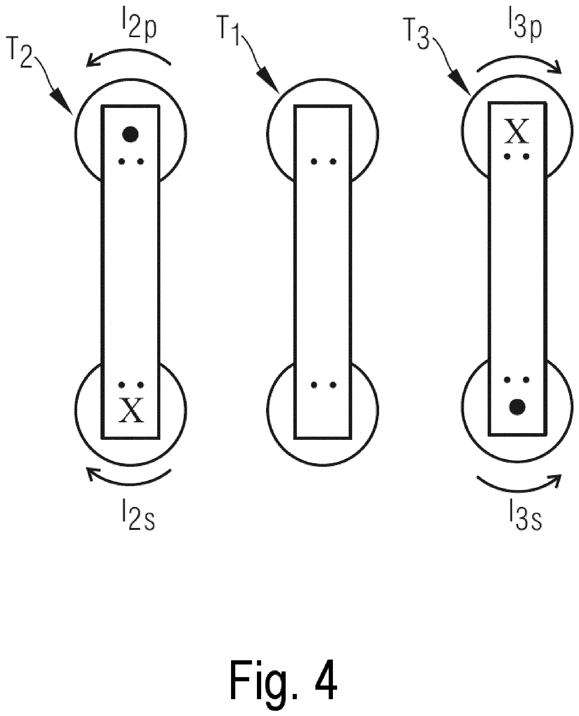

In order to avoid the abovementioned problem as far as possible in a compact space, the present invention first of all proposes an embodiment of a voltage transformation unit arrangement solution. Fig. 4 shows demonstratively, in the form of a top view, voltage transformation units T1, T2 and T3 on three of multiple low-voltage circuit branches of a power electronic transformer according to the present invention.

These low-voltage circuit branches are all arranged adjacently, such that the various voltage transformation units thereof are also arranged adjacently. In the embodiment according to the present invention shown in fig. 4, the directions of a primary-side current I_{2P} and a secondary-side current I_{2S} of a second voltage transformation unit T2 are as shown in the figure, and leakage magnetic fluxes thereof will have an effect on a first voltage transformation unit T1 adjacent thereto. To offset this effect, correspondingly, adjustment can be carried out so that a primary-side current I_{3P} and a secondary-side current I_{3S} of a third voltage transformation unit T3, which is adjacent to the first voltage transformation unit T1 and located on a different side from the second voltage transformation unit T2, are such that a magnetic flux, at the first voltage transformation unit T1, of magnetic leakage of the third voltage transformation unit T3, and a leakage magnetic flux, at the first voltage transformation unit T1, of the second voltage transformation unit T2, offset each other, or at least are minimized. In particular, when the voltage transformation units in the various low-voltage circuit branches in this power electronic transformer have the same design, i.e. have cores and windings (number of turns and winding direction) of the same design, it is only necessary for the primary-side current I_{3P} in the third voltage transformation unit T3 and the primary-side current I_{2P} of the second voltage transformation unit T2 to be in opposite directions, and correspondingly, for the secondary-side current I_{3S} in the third voltage transformation unit T3 and the secondary-side current I_{2S} of the second voltage transformation unit T2 to be in opposite directions, in order to achieve implementation.

By extension, when N adjacently arranged voltage transformation units are provided (N being a natural number greater than 2), the effects of leakage magnetic fluxes of any pair of voltage transformation units separated by an intermediate voltage transformation unit (i.e. first voltage transformation unit) as in the embodiment shown in fig. 4, at the intermediate voltage transformation unit, can offset each other or be minimized by adjusting primary-side currents and secondary-side currents in the various voltage transformation units. In the case of a power electronic transformer, since the DC/AC/DC conversions in each low-voltage circuit branch are independent of each other, the currents of each voltage transformation unit can be controlled independently. Hence the solution of the present invention can be implemented easily.

It is clear from fig. 4 that when N adjacently arranged voltage transformation units are provided, in order to also be able to offset interference caused by e.g. the first voltage transformation unit to the third voltage transformation unit T3, a magnetic flux opposite to that of the first voltage transformation unit T1 must be provided by a voltage transformation unit (not shown) on the right side of the third voltage transformation unit T3. In other words, it should be ensured that each voltage transformation unit is arranged between voltage transformation units which generate two opposite magnetic fluxes. However, even if this is done, in such a linear arrangement, interference from leakage magnetic fluxes at the two voltage transformation units located at head and tail positions cannot be offset.

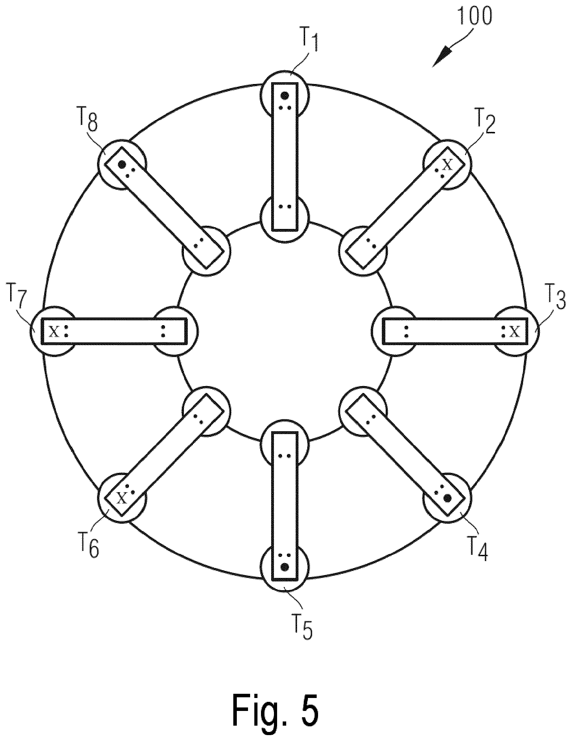

In order to solve this problem, an embodiment according to the present invention, as shown in fig. 5, is proposed. Fig. 5 demonstratively shows a situation where 8 voltage transformation units are provided, the eight voltage transformation units T1, T2, T3, T4, T5, T6, T7 and T8 being arranged annularly. The directions of magnetic fluxes generated by primary and secondary coils of the various voltage transformation units are also shown schematically in the figure by "·" and "x". Since an annular arrangement is employed, the two voltage transformation units at the head and tail positions of the adjacently arranged voltage transformation units shown in fig. 4 for example have adjacent voltage transformation units on both sides. Hence, by adjusting the currents in the various voltage transformation units, the effect on each voltage transformation unit of the leakage magnetic fluxes of the voltage transformation units on the two sides thereof can be minimized. In general, in order to enable each voltage transformation unit in an annular arrangement to benefit from such an arrangement, the number of voltage transformation units should be a multiple of four. In practice, the number of low-voltage circuit branches in a power electronic transformer is also generally a multiple of four. Thus, although not shown, it is also possible to arrange multiples of 4 such as 12, 16 and 20 voltage transformation units. Taking voltage transformation unit T6 in fig. 5 as an example, a current of its own coil is such that a magnetic flux generated thereby is directed into the paper. A magnetic flux of voltage transformation unit T5 on the right side, shown in the figure, of the voltage transformation unit T6 is directed outward, perpendicular to the paper; a magnetic flux of voltage transformation unit T7 on the left side shown in the figure is directed inward, perpendicular to the paper. The directions of magnetic fluxes of voltage transformation unit T5 and voltage transformation unit T7 can be made opposite to each other through control, and the leakage magnetic fluxes at voltage transformation unit T6 can offset each other, such that the effect of leakage magnetic fluxes on the voltage transformation units is minimized.

Ideally, each voltage transformation unit has the same design, and the voltage transformation units are arranged equidistantly from each other on an annular insulating support, to optimize the performance of the power electronic transformer. Voltage transformation units arranged annularly can also save installation space effectively.

It should be understood that although the description herein is based on various embodiments, it is by no means the case that each embodiment contains just one independent technical solution. Such a method of presentation is adopted herein purely for the sake of clarity. Those skilled in the art should consider the description in its entirety. The technical solutions in the various embodiments could also be suitably combined to form other embodiments capable of being understood by those skilled in the art.

The embodiments above are merely particular schematic embodiments of the present invention, which are not intended to limit the scope thereof.

## Claims

1. A power electronic transformer (100), comprising at least N low-voltage circuit branches, wherein each low-voltage circuit branch is respectively provided with a voltage transformation unit (T1, T2...Tn), all the voltage transformation units (T1, T2...Tn) are disposed adjacently, and N is a natural number greater than 3, **characterized in that**
an (M-1)th voltage transformation unit (Tm-1) and an (M+1)th voltage transformation unit (Tm+1) on two sides of any one Mth voltage transformation unit (Tm) amongst the voltage transformation units have opposite magnetic flux directions, wherein M is an integer greater than 1 and less than N.

2. The power electronic transformer (100) as claimed in claim 1, **characterized in that** magnetic fluxes, generated at the Mth voltage transformation unit (Tm), of the (M-1)th voltage transformation unit (Tm-1) and the (M+1)th voltage transformation unit (Tm+1) offset each other.

3. The power electronic transformer (100) as claimed in claim 1 or 2, **characterized in that** all the voltage transformation units (T1, T2...Tn) are the same in design, and current directions in windings in the (M-1)th voltage transformation unit (Tm-1) and the (M+1)th voltage transformation unit (Tm+1) are opposite.

4. The power electronic transformer (100) as claimed in claim 1 or 3, **characterized in that** all the voltage transformation units (T1, T2...Tn) are arranged equidistantly from each other.

5. The power electronic transformer (100) as claimed in claim 1, **characterized in that** the N voltage transformation units (T1, T2...Tn) are annularly arranged, such that an Nth voltage transformation unit (Tn) is adjacent to a first voltage transformation unit (T1), wherein N is an integer multiple of 4.

6. The power electronic transformer (100) as claimed in claim 5, **characterized in that** all the voltage transformation units (T1, T2...Tn) are arranged with equal included angles therebetween.

7. The power electronic transformer (100) as claimed in claim 5 or 6, **characterized in that** all the voltage transformation units (T1, T2...Tn) are arranged on an annular insulating support.

## Patentansprüche

1. Leistungselektronischer Transformator (100), wenigstens N Niederspannungs-Leitungsabzweige umfassend, wobei jeder Niederspannungs-Leitungsabzweig mit einer Spannungswandlereinheit (T1, T2 ... Tn) ausgestattet ist, alle Spannungswandlereinheiten (T1, T2 ... Tn) nebeneinander angeordnet sind und N eine natürliche Zahl größer als 3 ist, **dadurch gekennzeichnet, dass**
eine (M-1)-te Spannungswandlereinheit (Tm-1) und eine (M+1)-te Spannungswandlereinheit (Tm+1) auf beiden Seiten einer beliebigen M-ten Spannungswandlereinheit (Tm) unter den Spannungswandlereinheiten entgegengesetzte Magnetflussrichtungen aufweisen, wobei M eine Ganzzahl größer als 1 und kleiner als N ist.

2. Leistungselektronischer Transformator (100) nach Anspruch 1, **dadurch gekennzeichnet, dass** Magnetflüsse, die an der M-ten Spannungswandlereinheit (Tm) erzeugt werden, der (M-1)-ten Spannungswandlereinheit (Tm-1) und der (M+1)-ten Spannungswandlereinheit (Tm+1) einander ausgleichen.

3. Leistungselektronischer Transformator (100) nach Anspruch 1 oder 2, **dadurch gekennzeichnet, dass** alle Spannungswandlereinheiten (T1, T2 ... Tn) gleich aufgebaut sind und dass die Stromrichtungen in Wicklungen in der (M-1)-ten Spannungswandlereinheit (Tm-1) und der (M+1)-ten Spannungswandlereinheit (Tm+1) einander entgegengesetzt sind.

4. Leistungselektronischer Transformator (100) nach Anspruch 1 oder 3, **dadurch gekennzeichnet, dass** alle Spannungswandlereinheiten (T1, T2 ... Tn) in gleichem Abstand zueinander angeordnet sind.

5. Leistungselektronischer Transformator (100) nach Anspruch 1, **dadurch gekennzeichnet, dass** die N Spannungswandlereinheiten (T1, T2 ... Tn) ringförmig angeordnet sind, so dass eine N-te Spannungswandlereinheit (Tn) einer ersten Spannungswandlereinheit (T1) benachbart ist, wobei N ein ganzzahliges Vielfaches von 4 ist.

6. Leistungselektronischer Transformator (100) nach Anspruch 5, **dadurch gekennzeichnet, dass** alle Spannungswandlereinheiten (T1, T2 ... Tn) mit gleichen eingeschlossenen Winkeln dazwischen angeordnet sind.

7. Leistungselektronischer Transformator (100) nach Anspruch 5 oder 6, **dadurch gekennzeichnet, dass** alle Spannungswandlereinheiten (T1, T2 ... Tn) auf einer ringförmigen isolierenden Halterung angeordnet sind.

## Revendications

1. Transformateur électronique de puissance (100), comprenant au moins N branches de circuit basse tension, dans lequel chaque branche de circuit basse tension est respectivement munie d'une unité de transformation de tension (T1, T2 ... Tn), toutes les unités de transformation de tension (T1, T2 ... Tn) sont disposées de manière adjacente, et N est un nombre naturel supérieur à 3,
**caractérisé en ce que**
une (M-1)-ième unité de transformation de tension (Tm-1) et une (M+1)-ième unité de transformation de tension (Tm+1) des deux côtés d'une M-ième unité de transformation de tension (Tm) quelconque parmi les unités de transformation de tension présentent des directions de flux magnétique opposées, M étant un nombre entier supérieur à 1 et inférieur à N.

2. Transformateur électronique de puissance (100) selon la revendication 1, **caractérisé en ce que** les flux magnétiques, générés à la M-ième unité de transformation de tension (Tm), de la (M-1)-ième unité de transformation de tension (Tm-1) et de la (M+1)-ième unité de transformation de tension (Tm+1) se compensent.

3. Transformateur électronique de puissance (100) selon la revendication 1 ou 2, **caractérisé en ce que** toutes les unités de transformation de tension (T1, T2 ... Tn) sont du même modèle, et les directions de courant dans les enroulements dans la (M-1)-ième unité de transformation de tension (Tm-1) et la (M+1)-ième unité de transformation de tension (Tm+1) sont opposées.

4. Transformateur électronique de puissance (100) selon la revendication 1 ou 3, **caractérisé en ce que** toutes les unités de transformation de tension (T1, T2 ... Tn) sont agencées de manière équidistante les unes des autres.

5. Transformateur électronique de puissance (100) selon la revendication 1, **caractérisé en ce que** les N unités de transformation de tension (T1, T2 ... Tn) sont agencées en anneau, de sorte qu'une Nième unité de transformation de tension (Tn) est adjacente à une première unité de transformation de tension (T1), N étant un multiple entier de 4.

6. Transformateur électronique de puissance (100) selon la revendication 5, **caractérisé en ce que** toutes les unités de transformation de tension (T1, T2 ... Tn) sont agencées avec des angles inclus égaux entre celles-ci.

7. Transformateur électronique de puissance (100) selon la revendication 5 ou 6, **caractérisé en ce que** toutes les unités de transformation de tension (T1, T2 ... Tn) sont agencées sur un support isolant annulaire.
